Europäisches Patentamt

**European Patent Office**

**Office européen des brevets**

(19)

(11) Numéro de publication: **0 038 250**
**A1**

(12)

# DEMANDE DE BREVET EUROPEEN

(21) Numéro de dépôt: **81400546.8**

(22) Date de dépôt: **03.04.81**

(51) Int. Cl.³: **A 21 B 7/00,** A 21 B 1/52,
B 60 P 3/025, B 60 P 3/42

(30) Priorité: **11.04.80 FR 8008166**

(43) Date de publication de la demande: **21.10.81**
**Bulletin 81/42**

(84) Etats contractants désignés: **AT BE CH DE GB IT LI LU
NL SE**

(71) Demandeur: **Legueu, Paul, 85, Avenue de Mazy,
F-44380 Pornichet (FR)**

(72) Inventeur: **Legueu, Paul, 85, Avenue de Mazy,
F-44380 Pornichet (FR)**

(74) Mandataire: **Rodhain, Claude, Cabinet Claude
RODHAIN 30, rue La Boétie, F-75008 Paris (FR)**

(54) **Installation de panification, telle que boulangerie de campagne aux armées.**

(57) L'essence de la solution de ce problème réside en ce que l'installation comprend au moins deux véhicules (1–2) comportant des faces arrières escamotables (17) pour pouvoir être accouplés deux à deux par leurs faces frontales (19–20), l'un desdits véhicules étant pourvu d'un moyen d'étanchéité (21), des organes d'assemblage amovibles (22) assurant l'accouplement desdits véhicules (1–2), ces deux véhicules étant pourvus de postes de pétrissage (11) et de cuisson (6) respectivement reliés à une réserve en eau portée par un véhicule et au groupe électrogène (7) fournissant l'énergie électrique nécessaire à leur fonctionnement, de sorte que l'ensemble de l'Installation est monté mobile sur roues.

L'utilisation principale de l'invention est la fabrication de pain pour des troupes en campagne ou en manœuvre.

Installation de panification, telle que boulangerie de campagne aux armées.

L'invention concerne une installation de panification telle que boulangerie de campagne aux armées, destinée à être incorporée dans une compagnie de véhicules de grande autonomie évoluant dans des régions désertiques ou sur des terrains éloignés de toute source de ravitaillement.

Le pain constitue, comme chacun le sait, la nourriture de base des sociétés occidentales et la fabrication de cet aliment pose de sérieuses difficultés lorsqu'elle doit être envisagée en dehors de tout centre urbain et plus particulièrement dans des régions dépourvues de toute source d'approvisionnement en eau ou en électricité. Ce problème se pose de façon encore plus aiguë lorsqu'il faut fabriquer plusieurs centaines de kilos de pain par jour, comme c'est le cas pour les troupes militaires en campagne ou en manoeuvre dans des régions relativement désertiques.

Ces compagnies mobiles sont généralement dotées de toute une gamme de véhicules de caractère complémentaire comprenant des véhicules de transport de troupes, des remorques porte shelter, des camions ateliers et d'approvisionnement, des véhicules ambulances, des cuisines roulantes, des camions citernes de ravitaillement en eau, etc... ces différents véhicules permettant à la collectivité de pouvoir "vivre sur elle-même" pendant une période donnée quelle que soit la zone géographique dans laquelle elle évolue.

Dans le cadre de cette organisation matérielle, le ravitaillement de la troupe en pain s'effectue généralement soit à partir d'un stock constitué à la base de départ, soit à l'aide d'une panification effectuée sur place en utilisant les moyens de cuisson réservés aux repas ou encore à l'aide d'un four à pains chauffé au bois, dont la puissance et la capacité ne permettent pas de réaliser la portion minimum due à chaque soldat. En outre, la force principale de ces unités étant basée sur leur mobilité, le caractère statique des fours à bois reposant sur le sol va à l'encontre de cette mobilité dans la mesure où leur maniement est malaisé surtout lorsqu'ils sont chauds ce qui constitue un véritable "boulet" à traîner pour les compagnies.

- 2 -                                    0038250

L'invention a pour but de remédier à ces inconvénients et concerne une installation de panification permettant d'accroître très sensiblement la logistique des compagnies mobiles en exploitant les ressources des véhicules existants et notamment ceux fournisseurs d'eau et d'électricité. Selon un objet essentiel de l'invention, l'installation de panification est montée mobile, de sorte qu'elle fait corps avec le reste des véhicules et qu'elle ne constitue plus une entrave à la levée du camp en cas de départ précipité de la troupe.

L'invention concerne donc une installation de panification, telle que boulangerie de campagne aux armées, destinée à être incorporée notamment à une compagnie de véhicules de grande autonomie, évoluant dans des régions désertiques ou éloignées de source de ravitaillement, cette compagnie comprenant des véhicules tracteurs et des remorques porte-shelter, des camions-citernes, une remorque porte-groupe électrogène, installation caractérisée en ce qu'elle comprend au moins deux véhicules comportant des faces arrières escamotables pour pouvoir être accouplés deux à deux par leurs faces frontales, l'un desdits véhicules étant pourvu d'un moyen d'étanchéité, des organes d'assemblage amovibles assurant l'accouplement desdits véhicules, ces deux véhicules étant pourvus de postes de pétrissage et de cuisson respectivement reliés à une réserve en eau portée par un véhicule et au groupe électrogène fournissant l'énergie électrique nécessaire à leur fonctionnement, de sorte que l'ensemble de l'installation est monté mobile sur roues.

Suivant un mode de réalisation, l'un des véhicules est un camion à plateforme porte-shelter dont la face arrière est formée d'une paroi basculante, l'autre véhicule étant une remorque porte-shelter dont l'une des faces avant ou arrière est également formée d'une paroi basculante.

D'autres caractéristiques et avantages de l'invention ressortiront de la description ci-après et des dessins annexés dans lesquels :

- la Fig. 1 est une vue schématique en plan des deux véhicules accouplés, comportant les postes de pétrissage et de cuisson de l'installation ;

- la Fig. 2 est une vue de dessus de l'ensemble de l'installation mobile selon l'invention ;

- la Fig. 3 est une vue partielle illustrant les moyens d'accouplement des deux véhicules vus à la Fig. 1.

L'objet essentiel de l'invention est de mettre à la disposition de toute collectivité, et notamment de fournir à une compagnie véhiculée, une installation de panification mobile pouvant réaliser, par exemple, la fabrication de pains en boule de 900 g à 1 kg maximum, afin d'alimenter en ration journalière une troupe de 800 à 1200 hommes.

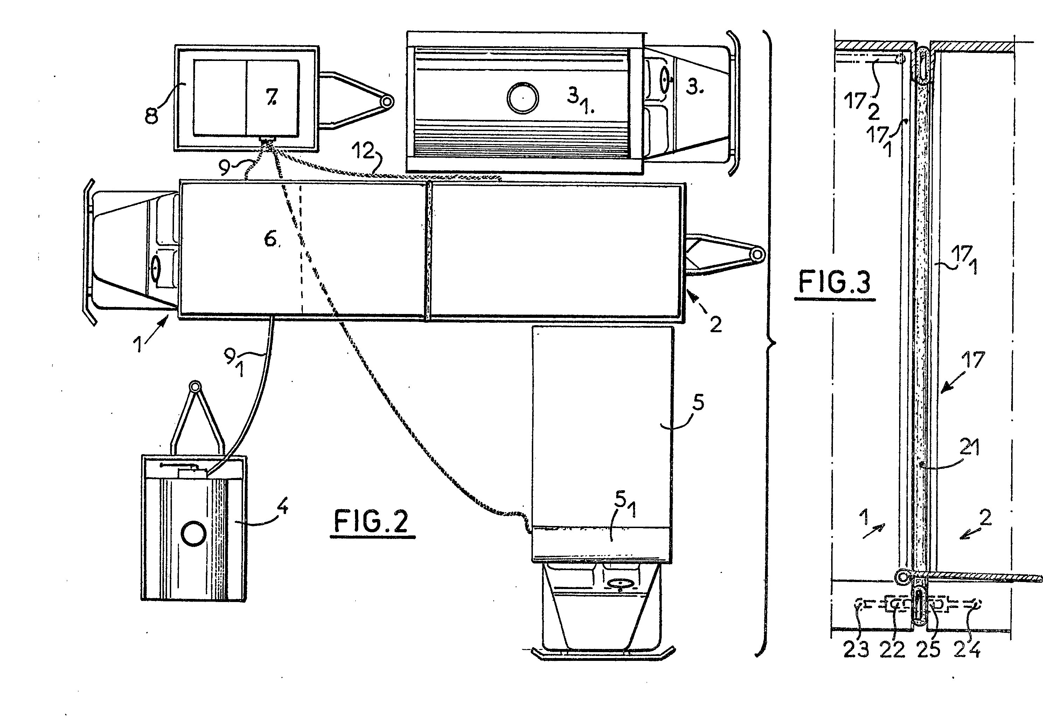

Comme illustré en Fig. 2, on utilise à cet effet un camion à moteur 1 avec plateau porte-shelter, un autre camion ou une remorque 2 également porte-shelter, un véhicule à citerne 3 servant de réserve d'eau, une remorque-citerne 4, et enfin un ou plusieurs véhicules 5 servant à l'alimentation de l'installation en farine. Les deux véhicules principaux 1 et 2 renferment les moyens propres au pétrissage, à la fermentation et à la cuisson du pain, cesdits moyens étant portés par les plateaux $1_1$ et $2_1$ des véhicules, afin d'être mobiles avec lesdits véhicules. Dans l'exemple considéré, le camion 1 porte-shelter renferme un four électrique 6 alimenté par un groupe électrogène 7 (lui-même monté mobile sur une remorque portée 8), ce groupe électrogène étant associé à un moteur six cylindres identique à celui des véhicules tracteur, de façon à permettre une interchangeabilité en cas de panne. Ce four électrique 6 a une capacité suffisante pour pouvoir réaliser entre 400 et 600 kilos de pain par jour, ledit four étant relié au groupe électrogène 7 par un conducteur 9 traversant le plancher ou les parois latérales du véhicule 1. Dans ce même véhicule, est par ailleurs prévue une table de travail 10 permettant la manipulation des panetières et le démoulage des pains.

La remorque 2 porte-shelter renferme, quant à elle, un pétrin mécanique 11 assurant la transformation de la farine en pâte, ce pétrin étant alimenté en énergie électrique à partir du groupe électrogène 7 par un conducteur électrique 12. Le pétrissage et la fermentation de la pâte s'effectuent dans ce pétrin 11, qui est alimenté en eau à partir d'une conduite 13 et d'une pompe $13_1$ prélevant

le liquide dans des réservoirs $13_2$ de grande capacité s'étendant sur une large surface et sous le ou les planchers $1_1$-$2_1$ des véhicules, ces réservoirs étant alimentés eux-mêmes à partir du camion 3 dont le niveau de la citerne $3_1$ est supérieur auxdits réservoirs, afin que cette alimentation se fasse par simple gravité. La remorque 2 comprend également une capacité à farine 16 alimenté à partir d'un camion d'approvisionnement 5 amené dans un plan perpendiculaire à ladite remorque, de façon que sa face frontale arrière soit en regard d'une porte latérale 28 dont est pourvue la remorque. Ce camion 5 est équipé d'un groupe frigorifique $5_1$ relié au groupe électrogène 7 par un conducteur $5_2$, ce groupe frigorifique ayant pour objet de maintenir une température de l'ordre de quelques degrés centigrades dans l'enceinte isotherme du véhicule, afin d'éviter la dégradation de la farine du fait d'une élévation de la température extérieure.

En outre, le four de cuisson 6 est relié par un conduit $9_1$ à la citerne de la remorque 4 qui pulvérise de l'eau dans le four sur le pain pendant la cuisson, ce qui est une condition nécessaire d'une bonne panification. Les deux véhicules 1 et 2 sont également pourvus de radiateurs électriques 14 reliés au groupe électro-gène 7 par des conducteurs 15, ces radiateurs maintenant dans ces véhicules une température ambiante favorable à la levée du pain.

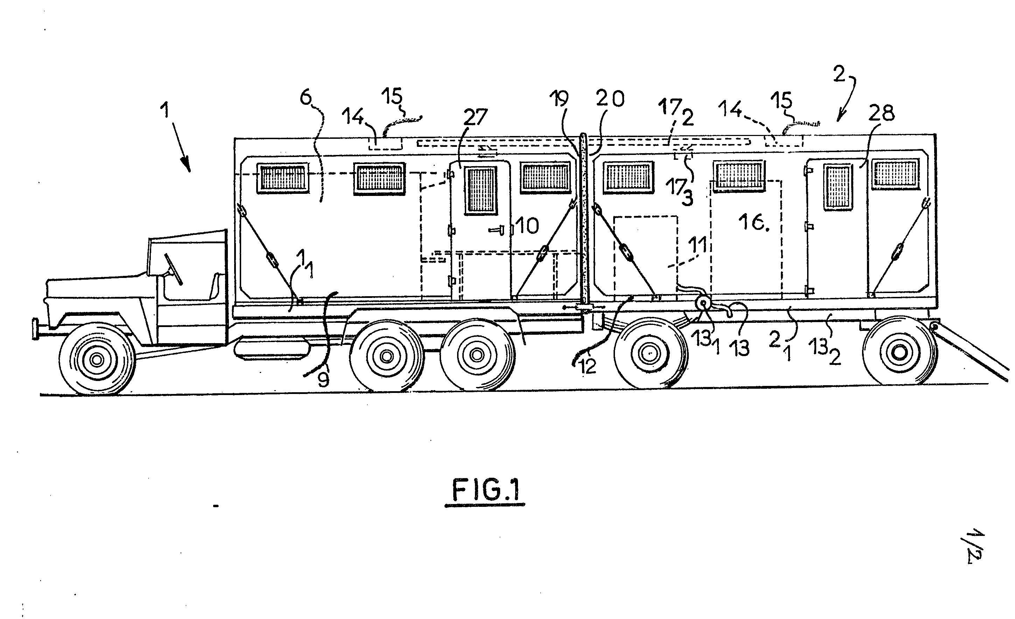

Selon une particularité de l'invention, les deux véhicules essentiels 1 et 2 de l'installation présentent des faces arrières, pour le camion, et avant, pour la remorque, obturées par des parois basculantes 17 qui peuvent être amenées d'une position verti-cale $17_1$ à une position basculée vers l'intérieur $17_2$ dans laquelle les parois ou portes 17 sont situées dans un plan sensiblement parallèle au pavillon des deux véhicules. Ces portes peuvent être équipées, à l'instar des portes de garage, de contrepoids $17_3$ favorisant leur stabilité en position horizontale. Les deux véhicules 1 et 2 peuvent ainsi être accouplés par leurs faces frontales 19 et 20, comme illustré en Fig. 1, de façon à former une seule et même capacité continue lorsque les deux portes 17 sont dans la position horizontale $17_2$ (Fig. 1). Afin d'éviter toute ligne de transition entre les deux véhicules, il est prévu un joint d'étanchéité 21 de type torique entourant la face frontale d'un

0038250

des deux véhicules, ce joint étant compressible et s'écrasant lors de l'accouplement des véhicules 1 et 2. L'assemblage positif des deux véhicules est réalisé par des tendeurs 22, dont les extrêmités 23 et 24 sont respectivement fixées sur le véhicule 1 et sur le véhicule 2, ces tendeurs étant pourvus d'un organe de réglage 25 assurant le positionnement des véhicules l'un par rapport à l'autre. L'un des véhicules, par exemple le camion 1, peut comporter une ridelle 26 susceptible d'être rabattue à l'intérieur de la remorque 2, pour constituer une sorte de pont au niveau du joint 21.

Selon une autre caractéristique de l'invention, ces véhicules assemblés par leurs faces frontales comportent des portes latérales 27 et 28 donnant respectivement accès à l'intérieur du shelter du camion 1 et du shelter de la remorque 2. La base des portes 27 et 28 est située au niveau des plateformes $1_1$ et $2_1$, de manière à ce que l'on puisse amener à niveau le véhicule d'approvisionnement 5 (Fig. 2), ce véhicule étant destiné à l'approvisionnement de la remorque en farine. Il est à noter, et ceci est une caractéristique importante de l'invention, que tous les châssis des véhicules, qu'il s'agisse du camion 1, de la remorque 2, ou des véhicules 3, 4, 5 et 8, sont identiques, de sorte que les plateaux de ces véhicules sont situés au même niveau, ce qui permet, d'une part, l'accouplement des véhicules 1 et 2, comme illustré en Fig. 1, mais également aussi facilite l'approvisionnement de la remorque porte-shelter à l'aide du camion d'approvisionnement 5, comme illustré en Fig. 2.

Le groupe électrogène qui sert à l'alimentation en courant électrique du four et du pétrin, est un groupe sur remorque de 50 KWa 220/380 V, ce qui est largement suffisant pour pourvoir à l'alimentation desdits four et pétrin. Le camion-citerne 3, destiné à alimenter indirectement, par les réservoirs $13_2$, le pétrin en eau potable, est de 4000 litres, sachant que les besoins journaliers sont de 580 litres d'eau pour une ration en pain de 800 à 1200 hommes, tandis que les camions pour l'alimentation de l'installation en farine ont une capacité de 4500 kg, c'est-à-dire les ressources pour une semaine de sept jours de farine.

L'installation selon l'invention présente le grand avantage d'être mobile et de ne pas constituer une entrave à une levée de camp rapide de l'ensemble de la compagnie véhiculée, puisque tous les postes de travail sont montés sur camions et font par conséquent partie intégrante de l'ensemble de la compagnie de véhicules, cette installation présentant par ailleurs l'avantage d'être d'une grande autonomie puisqu'elle permet de réaliser les rations quotidiennes pour 800 à 1200 hommes de troupe, pendant au moins une semaine, ce qui est largement suffisant pour rejoindre des bases d'approvisionnement, même lorsque l'on est dans des régions désertiques. Il faut par ailleurs noter que cette installation de panification s'inscrit dans le cadre de toute une gamme de véhicules et vient, par conséquent, en fait, compléter la logistique de l'ensemble de la compagnie de véhicules qui comprend notamment des véhicules de transport de troupe, des véhicules ambulants, des véhicules-ateliers, des véhicules pour la cuisine, permettant à une collectivité de pouvoir vivre en circuit fermé, pendant plusieurs jours, voire plusieurs semaines.

Bien entendu, l'invention n'est pas limitée à l'exemple de réalisation ci-dessus décrit pour lequel on pourra prévoir d'autres variantes de réalisation sans pour cela sortir du cadre de l'invention.

REVENDICATIONS

1. Installation de panification, telle que boulangerie de campagne aux armées, destinée à être incorporée notamment à une compagnie de véhicules de grande autonomie, évoluant dans des régions désertiques ou éloignées de source de ravitaillement, cette compagnie comprenant des véhicules tracteurs, des remorques porte-shelter, des camions-citernes, une remorque porte-groupe électrogène, deux au moins des véhicules comportant des faces arrières ou avant escamotables pour être accouplées par leurs faces frontales à l'aide d'organes de fixation amovible avec interposition d'un joint d'étanchéité, installation caractérisée en ce que l'un des deux véhicules (1-2) comporte des moyens (11) de pétrissage de la pâte, reliés à un groupe électrogène (7) et alimenté par des moyens de fourniture en eau ($13-13_1-13_2$), l'autre véhicule (1) comportant une unité de cuisson (6) commandée par le groupe électrogène (7) et alimenté en eau d'humidification à partir d'une réserve d'eau (4), au moins l'un des deux véhicules étant pourvu d'une porte latérale (27-28) permettant d'avoir accès à l'intérieur des véhicules en position accouplée.

2. Installation selon la revendication 1, caractérisée en ce que les deux véhicules (1-2) destinés à être accouplés par leurs faces frontales, comportent sur au moins l'une de leurs faces avant ou arrière, une paroi basculante (17) susceptible de prendre deux positions, l'une verticale ($17_1$) assurant l'obturation de la face frontale considérée, l'autre horizontale ($17_2-26$) correspondant au dégagement total de l'ouverture de ladite face.

3. Installation selon la revendication 2, caractérisée en ce que la ridelle (26) du véhicule (1) est montée basculante et vient, en position horizontale, se rabattre sur le plancher de la caisse de l'autre véhicule (2) pour former un pont entre les deux véhicules.

4. Installation selon l'une quelconque des revendications de 1 à 3, caractérisée en ce que l'un des deux véhicules (1) est un camion à plate forme porte-shelter, l'autre étant une remorque (2) également porte-shelter, celle-ci comportant sur chacune de ses deux faces frontales une paroi basculante (17).

5. Installation selon la revendication 1, caractérisée en ce que les moyens de pétrissage (11) sont constitués d'un pétrin mécanique, porté par la remorque (2), et relié d'une part, par un conduit (13) à une pompe ($13_1$) prélevant de l'eau dans des réservoirs ($13_2$) logés sous la plateforme ($2_1$) de ladite remorque et, d'autre part, par un conducteur électrique (12) au groupe électrogène (7) monté sur une seconde remorque indépendante (8).

6. Installation selon la revendication 1, caractérisée en ce que l'unité de cuisson est constituée d'un four électrique (6) porté par le camion (1) et relié par un conducteur (9) au groupe électrogène (7), ce four étant alimenté en eau d'humidification par un conduit ($9_1$) prélevant l'eau dans une troisième remorque-citerne (4).

7. Installation selon l'une quelconque des revendications de 1 à 6, caractérisée en ce que tous les véhicules qui la composent sont constitués de châssis identiques et de même niveau.

8. Installation selon la revendication 5, caractérisée en ce que les réservoirs ($13_2$) du véhicule (2) sont remplis par simple gravité à partir d'un véhicule nourricier (3), la citerne ($3_1$) de ce véhicule étant située à un niveau supérieur à celui des réservoirs ($13_2$) de la remorque porte-shelter (2).

9. Installation selon l'une quelconque des revendications de 1 à 8, caractérisée en ce que les deux véhicules (1-2) sont équipés de radiateurs électriques (14) reliés au groupe électrogène (7) pour favoriser la levée du pain.

10. Installation selon l'une quelconque des revendications de 1 à 9, caractérisée en ce que la remorque (2) est alimentée en farine à partir d'un véhicule de ravitaillement (5) dont la face arrière est amenée en regard de la porte latérale (28) de ladite remorque, ce véhicule (5) étant pourvu d'un groupe frigorifique ($5_1$) relié au groupe électrogène (7) par un conducteur ($5_2$).

FIG.1

0038250

FIG.2

FIG.3

0038250

Office européen des brevets

## RAPPORT DE RECHERCHE EUROPEENNE

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 816 520 (LIDON)<br>* Page 1, ligne 49 - page 2, ligne 16; page 4, ligne 43 - page 5, ligne 5; figure 1-7 *<br><br>-- | 1,2,5,7 |
| | FR - A - 1 079 726 (LUC)<br>* Page 2, colonne 1, ligne 40 - page 3, colonne 2, ligne 9; figures 1-5 *<br><br>-- | 1,5,6,7 |
| | FR - A - 1 192 671 (LIDON)<br>* Ensemble *<br><br>-- | 1,2,5,7 |
| | FR - A - 782 655 (GIACOMA)<br>* Page 2, lignes 17-26; figures 1,2 *<br><br>---- | 2 |

**CLASSEMENT DE LA DEMANDE (Int. Cl.³)**

A 21 B 7/00
       1/52
B 60 P 3/025
       3/42

**DOMAINES TECHNIQUES RECHERCHES (Int. Cl.³)**

A 21 B
B 60 P
B 60 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 17-07-1981 | VROMMAN |

OEB Form 1503.1　06.78